# EUROPÄISCHE PATENTSCHRIFT

(11) **EP 1 464 859 B1**
(45) Veröffentlichungstag und Bekanntmachung des Hinweises auf die Patenterteilung: **28.05.2008**
(21) Anmeldenummer: 04007516.0
(22) Anmeldetag: 29.03.2004
(51) Int. Cl.: F16D 21/06, F16D 25/10

(54) **Mehrfachkupplungsaggregat**
Multiple clutch unit
Ensemble d'embrayage multiple

(30) Priorität: 04.04.2003 DE 10315393
(43) Veröffentlichungstag der Anmeldung: 06.10.2004
(73) Patentinhaber: LuK Lamellen und Kupplungsbau Beteiligungs KG, 77815 Bühl (DE)
(72) Erfinder: Friedmann, Oswald, 77839 Lichtenau (DE)

(56) Entgegenhaltungen:
- DE-B- 1 123 567
- GB-A- 594 950
- US-A- 2 586 220
- US-A- 3 047 115

## Beschreibung

Die Erfindung betrifft ein Mehrfachkupplungsaggregat für ein Getriebe, mit einer ersten Kupplung, insbesondere einer Lamellenkupplung, die drehfest mit einer ersten Getriebeeingangswelle verbunden ist, und mit mindestens einer zweiten Kupplung, insbesondere einer Lamellenkupplung, die drehfest mit einer zweiten Getriebeeingangswelle verbunden und koaxial zu der ersten Kupplung angeordnet ist, wobei die Kupplungen über Kolben-/Zylindereinheiten insbesondere hydraulisch betätigbar sind.

Durch die US 2,586,220 ist eine hydraulisch betätigbare Doppelkupplung mit Reiblamellen bekannt geworden. Eine hydraulisch betätigbare Doppelkupplung mit einfachen Kupplungsscheiben ist durch die GB 594 950 A bekannt geworden. Eine hydraulisch betätigbare Lamellenkupplung ist durch die DE 1123567 B vorgeschlagen worden.

Herkömmliche Mehrfachkupplungsaggregate sind oft kompliziert aufgebaut, was zu relativ hohen Herstell- und Montagekosten führt.

Aufgabe der Erfindung ist es daher, ein Mehrfachkupplungsaggregat für ein Getriebe, mit einer ersten Kupplung, insbesondere einer Lamellenkupplung, die drehfest mit einer ersten Getriebeeingangswelle verbunden ist, und mindestens einer zweiten Kupplung, insbesondere einer Lamellenkupplung, die drehfest mit einer zweiten Getriebeeingangswelle verbunden und koaxial zu der ersten Kupplung angeordnet ist, wobei die Kupplungen über Kolben-/Zylindereinheiten insbesondere hydraulisch betätigbar sind, zu schaffen, das einfach aufgebaut und kostengünstig herstellbar ist.

Die Aufgabe ist bei einem Mehrfachkupplungsaggregat für ein Getriebe, mit einer ersten Kupplung, insbesondere einer Lamellenkupplung, die drehfest mit einer ersten Getriebeeingangswelle verbunden ist, und mindestens mit einer zweiten Kupplung, insbesondere einer Lamellenkupplung, die drehfest mit einer zweiten Getriebeeingangswelle verbunden und koaxial zu der ersten Kupplung angeordnet ist, wobei die Kupplungen über Kolben-/Zylindereinheiten insbesondere hydraulisch betätigbar sind, dadurch gelöst, dass eine der Kolben-/Zylindereinheiten, insbesondere die der ersten Kupplung zugeordnete Kolben-/Zylindereinheit, einen im Wesentlichen topfförmigen Zylinder umfasst, der drehfest, aber axial bewegbar mit einer der Getriebeeingangswellen, insbesondere der ersten Getriebeeingangswelle, verbunden ist und/oder zusammenwirkt, und einen Arbeitsraum (63) begrenzt, der über ein Durchgangsloch (62) in der zugehörigen Welle (21) mit Druck beaufschlagbar ist. Der Endabschnitt der Welle bildet praktisch einen drehbar gelagerten, aber axial feststehenden Kolben. Der Innenraum des topfförmigen Zylinders bildet einen Arbeitsraum, der durch die Stirnfläche der im Wesentlichen kreiszylinderförmigen Welle begrenzt wird. Wenn der Druck in dem Arbeitsraum zunimmt, dann bewegt sich der topfförmige Zylinder in axialer Richtung von der Welle weg. Dadurch wird eine Betätigung der zugehörigen Kupplung ermöglicht.

Ein bevorzugtes Ausführungsbeispiel des Kupplungsaggregats ist dadurch gekennzeichnet, dass der Innenraum des topfförmigen Zylinders über ein Durchgangsloch in der zugehörigen Welle mit Druck beaufschlagbar ist. Das vorzugsweise zentrale Durchgangsloch in der Vollwelle schafft eine hydraulische oder pneumatische Verbindung zwischen dem Innenraum des Zylinders und einer vorzugsweise steuer- und/oder regelbaren Druckquelle. Das liefert den Vorteil, dass keine zusätzlichen Leitungen benötigt werden, um eine Verbindung zu dem Innenraum des Zylinders herzustellen.

Ein weiteres bevorzugtes Ausführungsbeispiel des Mehrfachkupplungsaggregats ist dadurch gekennzeichnet, dass der topfförmige Zylinder durch eine formschlüssige Verbindung, insbesondere eine Verzahnung, drehfest, aber axial bewegbar mit einer der Wellen, insbesondere der ersten Welle, verbunden ist. Durch die formschlüssige Verbindung wird die Übertragung eines Drehmoments von dem topfförmigen Zylinder auf die Welle sichergestellt.

Ein weiteres bevorzugtes Ausführungsbeispiel des Mehrfachkupplungsaggregats ist dadurch gekennzeichnet, dass der topfförmige Zylinder über ein Zylinderkopplungselement mit einer der Kupplungen, insbesondere mit radial inneren Lamellen der ersten Kupplung, gekoppelt ist. Das Zylinderkopplungselement dient dazu, das Drehmoment von dem topfförmigen Zylinder auf die zugehörige Kupplung zu übertragen.

Ein weiteres bevorzugtes Ausführungsbeispiel des Mehrfachkupplungsaggregats ist dadurch gekennzeichnet, dass ein Wellenkopplungselement, das axial fest mit der zugehörigen Kupplung, insbesondere mit radial inneren Lamellen der ersten Kupplung, verbunden ist, axial fest zu der Welle, insbesondere zu der ersten Welle, angeordnet ist. Das Wellenkopplungselement bildet ein Widerlager für die zugehörigen Kupplungslamellen.

Ein weiteres bevorzugtes Ausführungsbeispiel des Mehrfachkupplungsaggregats ist dadurch gekennzeichnet, dass zwischen einem Teil des Wellenkopplungselements und einem Ansatz des topfförmigen Zylinders ein Druckaufnahmeraum ausgebildet ist, der, insbesondere über die formschlüssige Verbindung zwischen dem Zylinder und der zugehörigen Welle, mit dem Innenraum des Zylinders in Verbindung steht. Der Druckaufnahmeraum bildet also praktisch einen zweiten Arbeitsraum, der mit dem ersten Arbeitsraum in Verbindung steht. Die beiden Arbeitsräume oder Zylinder dienen zusammen mit dem beziehungsweise den zugehörigen Kolben dazu, eine der Kupplungen, insbesondere die erste Kupplung zu betätigen.

Ein weiteres bevorzugtes Ausführungsbeispiel des Mehrfachkupplungsaggregats ist dadurch gekennzeichnet, dass an der äußeren Umfangsfläche des topfförmigen Zylinders ein Getriebeeingangsteil drehbar gelagert ist, das sowohl mit der ersten als auch mit der zweiten Kupplung, insbesondere mit radial äußeren Lamellen der ersten und der zweiten Kupplung, drehfest verbunden ist. Durch die drehfeste Verbindung zwischen dem Getriebeeingangsteil und den Kupplungen wird es ermöglicht, ein zum Beispiel von einer Brennkraftmaschine bereitgestelltes Drehmoment, auf die erste oder die zweite Welle zu übertragen. Die erste Welle kann zum Beispiel zur Realisierung der Gänge 1, 3 und 5 und die zweite Welle zur Realisierung der Gänge 2, 4 und gegebenenfalls 6 dienen.

Ein weiteres bevorzugtes Ausführungsbeispiel des Mehrfachkupplungsaggregats ist dadurch gekennzeichnet, dass die radial äußeren Lamellen der ersten und der zweiten Kupplung über Verzahnungen mit jeweils einem Schenkel eines Lamellenverbindungsteils drehfest verbunden sind, das einen im Wesentlichen U-förmigen Querschnitt aufweist und mit dem Getriebeeingangsteil gekoppelt ist. Das Lamellenverbindungsteil kann als kostengünstig herstellbares Blechformteil ausgebildet sein.

Ein weiteres bevorzugtes Ausführungsbeispiel des Mehrfachkupplungsaggregats ist dadurch gekennzeichnet, dass im Inneren des U-förmigen Lamellenverbindungsteils ein im Wesentlichen ringförmiger Aufnahmeraum für eine der Kupplungen, insbesondere die erste Kupplung, gebildet ist. Dadurch wird eine kompakte Bauform des Mehrfachkupplungsaggregats gewährleistet.

Ein weiteres bevorzugtes Ausführungsbeispiel des Mehrfachkupplungsaggregats ist dadurch gekennzeichnet, dass die andere der Kolben-/Zylindereinheiten, insbesondere die der zweiten Kupplung zugeordnete Kolben-/Zylindereinheit, einen feststehenden Zylinder umfasst, der mit einem axial bewegbaren Kolbenelement zusammenwirkt, das unter Zwischenschaltung einer Lagereinrichtung mit einem Betätigungselement für die zugehörige Kupplung gekoppelt ist. Dadurch wird eine einfache, kompakte Anordnung der zugehörigen Kupplung ermöglicht.

Ein weiteres bevorzugtes Ausführungsbeispiel des Mehrfachkupplungsaggregats ist dadurch gekennzeichnet, dass die zweite Welle als Hohlwelle ausgebildet ist, welche die erste Welle umschließt. Dadurch wird der Aufbau des Mehrfachkupplungsaggregats vereinfacht.

Ein weiteres bevorzugtes Ausführungsbeispiel des Mehrfachkupplungsaggregats ist dadurch gekennzeichnet, dass den beiden Kupplungen ein Drehschwingungsdämpfer vorgeschaltet ist. Der Drehschwingungsdämpfer dient dazu, im Betrieb des Mehrfachkupplungsaggregats auftretende Drehschwingungen zu dämpfen. Der Drehschwingungsdämpfer ist vorzugsweise als geteiltes Schwungrad ausgebildet.

Bei einem Getriebe, zum Beispiel für den Einsatz in Kraftfahrzeugen, ist die oben angegebene Aufgabe durch die Verwendung eines vorab beschriebenen Mehrfachkupplungsaggregats gelöst.

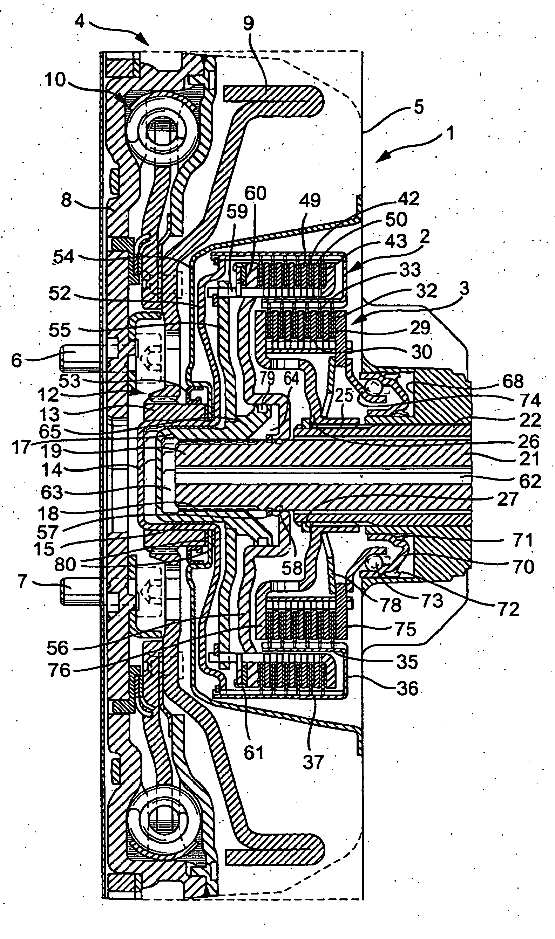

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist.

In der beiliegenden Figur ist ein zwischen einer Brennkraftmaschine und einem Getriebe, welche nicht näher dargestellt sind, angeordnetes Mehrfachkupplungsaggregat 1 im Schnitt dargestellt, das eine erste Lamellenkupplung 2 und eine zweite Lamellenkupplung 3 umfasst. Den beiden Lamellenkupplungen 2 und 3 ist auf der der (nicht dargestellten) Brennkraftmaschine zugewandten Seite ein Drehschwingungsdämpfer 4 vorgeschaltet. Die beiden Lamellenkupplungen 2 und 3 und der Drehschwingungsdämpfer 4 sind in einem gemeinsamen Gehäuse 5 untergebracht.

Der Drehschwingungsdämpfer 4 bildet ein geteiltes Schwungrad, das eine mit Hilfe von Befestigungsschrauben 6, 7 an einer nicht gezeigten Abtriebswelle einer Brennkraftmaschine befestigbare erste oder Primärschwungmasse 8 sowie eine zweite oder Sekundärschwungmasse 9 aufweist. Die beiden Schwungmassen 8, 9 sind zueinander verdrehbar gelagert. Zwischen den beiden Schwungmassen 8, 9 ist eine Dämpfungseinrichtung 10 wirksam, die Energiespeicher umfasst, von denen zumindest einer durch Schraubendruckfedern gebildet ist. Der Aufbau und die Funktion des Drehschwingungsdämpfers 4 werden als bekannt vorausgesetzt und daher hier nicht weiter erläutert.

Die Sekundärschwungmasse 9 ist über eine Verzahnung 12 drehfest mit einem Getriebeeingangsteil 13 verbunden. Über die Verzahnung 12 wird das von der (nicht dargestellten) Brennkraftmaschine gelieferte Drehmoment in das Getriebeeingangsteil 13 eingeleitet. Das Getriebeeingangsteil 13 hat die Gestalt eines Kreisrings mit einem im Wesentlichen rechteckförmigen Querschnitt. Radial innen ist an dem Getriebeeingangsteil 13 eine im Wesentlichen topfförmige Lagerschale 14 befestigt, die dazu dient, das Getriebeeingangsteil 13 drehbar zu lagern.

Die topfförmige Lagerschale 14 des Getriebeeingangsteils 13 ist mit Hilfe eines Radialgleitlagers 15 auf einem im Wesentlichen topfförmigen Zylinder 17 drehbar gelagert. Der Zylinder 17 hat im Wesentlichen die Gestalt eines Kreiszylinders, der auf einer Seite durch einen Deckel oder Boden geschlossen ist.

Der topfförmige Zylinder 17 ist über eine Verzahnung 18 drehfest mit dem Endabschnitt 19 einer ersten Welle 21 verbunden. Die erste Welle 21 ist koaxial innerhalb einer zweiten Welle 22 angeordnet, die als Hohlwelle ausgebildet ist. Die erste Welle 21 kann über die erste Kupplung 2 mit der (nicht dargestellten) Abtriebswelle einer Brennkraftmaschine gekoppelt werden. Die zweite als Hohlwelle ausgebildete Welle 22 kann über die zweite Kupplung 3 mit der (nicht dargestellten) Abtriebswelle einer Brennkraftmaschine gekoppelt werden.

Die zweite Welle 22 ist über eine Verzahnung 25 drehfest mit einem Wellenkopplungselement 26 verbunden. Das Wellenkopplungselement 26 ist durch einen Sicherungsring 27 in axialer Richtung zu dem Endabschnitt 19 der ersten Welle 21 hin gesichert. Das Wellenkopplungselement 26 schafft eine drehfeste Verbindung zwischen der zweiten Welle 22 und den radial inneren Lamellen 29, 30 der zweiten Kupplung 3. Die radial äußeren Lamellen 32, 33 der zweiten Kupplung 3 sind über eine Verzahnung drehfest mit einem Schenkel 35 eines Lamellenverbindungsteils 36 verbunden, das einen im Wesentlichen U-förmigen Querschnitt aufweist. Der zweite Schenkel 37 des Lamellenverbindungsteils 36 ist über eine Verzahnung drehfest mit den radial äußeren Lamellen 42, 43 der ersten Kupplung 2 verbunden. Das Lamellenverbindungsteil 36 bildet zwischen den parallelen Schenkeln 35 und 37 des U-förmigen Querschnitts einen Ringraum, in dem die erste Lamellenkupplung 2 aufgenommen ist.

Die radial äußeren Lamellen 42, 43 der ersten Kupplung 2 wirken mit radial inneren Lamellen 49, 50 zusammen, um im eingekuppelten Zustand ein Drehmoment von der (nicht dargestellten) Abtriebswelle einer Brennkraftmaschine auf die erste Welle 21 zu übertragen. Im ausgekuppelten Zustand können sich die radial äußeren Lamellen 42, 43 der ersten Kupplung 2 relativ zu den radial inneren Lamellen 49, 50 verdrehen. Im ausgekuppelten Zustand wird kein Drehmoment übertragen.

Der radial äußere Schenkel 37 des Lamellenverbindungsteils 36 ist über ein Trägerblech 52 mit der topfförmigen Lagerschale 14 und dem Getriebeeingangsteil 13 gekoppelt. Das Trägerblech 52 erstreckt sich im Wesentlichen in radialer Richtung und ist einstückig mit der topfförmigen Lagerschale 14 ausgebildet. Über das Trägerblech 52 wird im Betrieb ein Drehmoment von dem Getriebeeingangsteil 13 auf das Lamellenverbindungsteil 36 und die damit drehfest verbundenen radial äußeren Lamellen 42, 43; 32, 33 der beiden Kupplungen 3, 2 übertragen.
Zwischen dem Getriebeeingangsteil 13 und einem Abdeckblech 54 ist eine Wellendichtung 53 angeordnet. Das Abdeckblech 54 ist radial außen an dem Gehäuse 5 befestigt und dient dazu, die Kupplungen 2, 3 separat in dem Gehäuse 5 zu kapseln.

Von dem Zylinder 17 erstreckt sich in radialer Richtung ein Zylinderkopplungselement 55 zu der ersten Kupplung 2. Über das Zylinderkopplungselement 55 ist der Zylinder 17 fest mit einem Tragarm 59 verbunden, an dem die radial inneren Lamellen 49 ,50 der ersten Kupplung 2 angebracht sind. Über das Zylinderkopplungselement 55 wird eine axiale Bewegung des Zylinders 17 auf die radial inneren Lamellen 49, 50 der ersten Kupplung 2 übertragen.

Ein Wellenkopplungselement 56 ist mit Hilfe eines Sicherungsrings 57 axial fest auf der ersten Welle 21 angebracht. Durch den Sicherungsring 57 wird verhindert, dass sich das Wellenkopplungselement 56 zu dem Endabschnitt 19 der Welle 21 hin bewegt. Zwischen dem Wellenkopplungselement 56 und der äußeren Umfangsfläche der ersten Welle 21 ist ein Dichtring 58 angeordnet, der in Betrieb des Mehrfachkupplungsaggregats nur statisch belastet wird.

Der Tragarm 59, an dem die radial inneren Lamellen 49, 50 der ersten Kupplung 2 angebracht sind, ist relativ zu dem Wellenkopplungselement 56 in axialer Richtung bewegbar. Das Wellenkopplungselement 56 bildet an seinem freien Ende ein Widerlager für die Lamellen der ersten Kupplung 2, wenn der Tragarm 59 zu der (nicht dargestellten) Brennkraftmaschine hin bewegt wird.

Durch eine Rückstelltellerfeder 60, die mit Hilfe eines Hakens 61 mit dem Wellenkopplungselement 56 gekoppelt ist, wird sichergestellt, dass sich der Tragarm 59 mit den daran angebrachten Lamellen der ersten Kupplung 2 nach dem Betätigen der Kupplung wieder nach rechts bewegt. Die Rückstelltellerfeder 60 bewirkt also eine Rückstellung des Tragarms 59 und der daran angebrachten radial inneren Lamellen 49, 50 an der ersten Kupplung 2.

In der ersten Welle 21 ist ein zentrales Durchgangsloch 62 vorgesehen, das dazu dient, den im Inneren des Zylinders 17 gebildeten Arbeitsraum 63 mit Druck zu beaufschlagen. Der Arbeitsraum 63 ist über die Verzahnung 18 zwischen dem Zylinder 17 und dem Endabschnitt 19 der ersten Welle 21 mit einem Arbeitsraum 64 verbunden, der zwischen dem Ansatz 65 an dem Zylinder 17 und dem Wellenkopplungselement 56 ausgebildet ist. Durch diese Verbindung wird sichergestellt, dass in den Arbeitsräumen 63 und 64 der gleiche Druck herrscht. Ein Druckanstieg in den Arbeitsräumen 63 und 64 führt dazu, dass sich der Zylinder 17 mit dem Zylinderkopplungselement 55 von dem Wellenkopplungselement 56 weg bewegt. Das führt dazu, dass die radial inneren Lamellen 49, 50 der ersten Kupplung 2 mit den radial äußeren Lamellen 42, 43 der selben Kupplung in Anlage gebracht werden, so dass ein Drehmoment von dem Getriebeeingansteil 13 auf die erste Welle 21 übertragen wird. Wenn der Druck in den Arbeitsräumen 63 und 64 durch eine geeignete Ventileinrichtung abgebaut wird, dann sorgt die Rückstelltellerfeder 60 dafür, dass die Anlage zwischen den radial inneren Lamellen 49, 50 und den radial äußeren Lamellen 42, 43 der ersten Kupplung 2 aufgehoben und die Drehmomentübertragung unterbrochen wird.

In dem Gehäuse 5 ist ein Arbeitsraum 68 ausgespart, der einen Zylinderinnenraum zur Betätigung der zweiten Kupplung 3 bildet. Der Arbeitsraum 68 ist über eine (nicht dargestellte) Druckleitung mit Druck beaufschlagbar. Der Arbeitsraum 68 hat die Gestalt eines Ringraums mit einem rechteckförmigen Querschnitt. In dem Arbeitsraum 68 ist ein im Wesentlichen ebenfalls ringförmiger Kolben 70 aufgenommen, an dem zwei Dichtungen 71 und 72 angebracht sind, um den Arbeitsraum 68 abzudichten.

Der Kolben 70 weist im Wesentlichen einen U-förmigen Querschnitt auf, in dem eine Betätigungslagereinrichtung 73 aufgenommen ist. Die Lagereinrichtung 73 dient dazu, einen Betätigungsring 74 so drehbar gegenüber dem Kolben 70 zu lagern, dass eine axiale Bewegung von dem Kolben 70 auf den Betätigungsring 74 übertragen wird. Mit seinem, im Querschnitt betrachtet, von der Lagereinrichtung 73 abgewandten Ende befindet sich der Betätigungsring 74 in Anlage an einem Druckring 75, der in axialer Richtung bewegbar ist. Zwischen dem Druckring 75 und einem Gegendruckring 76, der an dem radial äußeren Ende des Wellenkopplungselements 26 ausgebildet ist, sind die Lamellen 29, 30; 32, 33 der zweiten Kupplung 3 angeordnet.

Wenn der Druck in dem Arbeitsraum 68 zunimmt, führt dies dazu, dass sich der Kolben 70, der damit gekoppelte Betätigungsring 74 und der ebenfalls damit gekoppelte Druckring 75 auf das axial feststehende Wellenkopplungselement 26 zubewegt. Dadurch werden die radial inneren Lamellen 29, 30 gegen die radial äußeren Lamellen 32, 33 der zweiten Kupplung 3 gedrückt, so dass ein Drehmoment von dem Getriebeeingangsteil 13 auf die zweite Welle 22 übertragen wird.

Wenn der Druck in dem Arbeitsraum 68 nachlässt, sorgt eine Rückstellfeder 78, die zwischen dem Druckring 75 und dem Wellenkopplungselement 26 vorgespannt ist, dafür, dass der Druckring 75, der Betätigungsring 74 und der Kolben 70 wieder von dem Gegendruckring 76 wegbewegt werden. Die Rückstellfeder 78 sorgt also für eine Rückstellung des Kolbens 70.

Der Arbeitsraum 64 wird auf der einen Seite von dem Wellenkopplungselement 56 und auf der anderen Seite von dem Ansatz 65 an dem Zylinder 17 begrenzt. Das Wellenkopplungselement 56 ist axial feststehend und der Zylinder 17 mit dem Ansatz 65 axial bewegbar ausgebildet. Zwischen dem Ansatz 65 des Zylinders 17 und der zugehörigen Anlagefläche an dem Wellenkopplungselement 56 ist eine bewegte Dichtung 79 angeordnet, die dazu dient, den Arbeitsraum 64 abzudichten.

Das Abdeckblech 54 ist radial außen an dem Gehäuse 5 abgestützt. Radial innen sind zwischen dem Abdeckblech 54 und dem Getriebeeingangsteil 13 auf der einen Seite und dem Trägerblech 52 auf der anderen Seite Anlaufscheiben 80 angeordnet. Die Anlaufscheiben 80 dienen dazu, das Getriebeeingangselement 13 und das Trägerblech 52 in axialer Richtung zu fixieren.

Die beiden radial übereinander angeordneten Kupplungen 2, 3 sind für die Gänge 1, 3 und 5 beziehungsweise 2, 4 und 6 zuständig. Die Kupplung 2 für die innere Welle 21 wird über den drehenden Zylinder 17, die für die äußere Welle 22 mit einem stehenden Zylinder betätigt. Der Betätigungskolben beziehungsweise Betätigungszylinder 17 für die erste Welle 21 hat nur eine bewegte Dichtung 79. Keine der Kupplungen 2, 3 stützt nennenswerte Axialkräfte an der (nicht dargestellten) Kurbelwelle der Brennkraftmaschine ab. Die Betätigungskraft der Kupplung 3 wird an der Hohlwelle 22 abgestützt. Das Betätigungslager 73 der Hohlwellenkupplung 3 ist in den Betätigungskolben 70 integriert. Das Getriebeeingangsteil 13 ist am Betätigungskolben beziehungsweise -zylinder 17 zentriert und am Gehäuseblech 54 axial geführt. Der Zylinder 17 der Kupplung 2 dient gleichzeitig als Nabe mit der Innenverzahnung 18. Wenn die Dreheinführung der inneren Welle 21 dicht ausgeführt wird, ist es möglich, beide Kupplungen 2, 3 hydrostatisch, das heißt ohne dauernd laufende Pumpe, zu betätigen.

### Bezugszeichenliste

| Pos. | Benennung | Pos. | Benennung | Pos. | Benennung |
|---|---|---|---|---|---|
| 1 | Kupplungsaggregat | 51 | | 101 | |
| 2 | Kupplung (erste) | 52 | Trägerblech = 37 | 102 | |
| 3 | Kupplung (zweite) | 53 | Wellendichtung | 103 | |
| 4 | Drehschwingungsdämpfer | 54 | Abdeckblech | 104 | |
| 5 | Gehäuse | 55 | Zylinderkopplungselement | 105 | |
| 6 | Befestigungsschraube | 56 | Wellenkopplungselement = Widerlager f. Lamelle v. 2 | 106 | |
| 7 | Befestigungsschraube | 57 | Sicherungsring | 107 | |
| 8 | Primärschwungmasse | 58 | Dichtring für Lamellen | 108 | |
| 9 | Sekundärschwungmasse | 59 | Tragarm m. Lamellen axial bewegbar | 109 | |
| 10 | Dämpfungseinrichtung | 60 | Rückstelltellerfeder | 110 | |
| 11 | | 61 | Haken | 111 | |
| 12 | Verzahnung | 62 | Zentrales Durchgangsloch | 112 | |
| 13 | Getriebeeingangsteil | 63 | Arbeitsraum | 113 | |
| 14 | Topfförmige Lagerschale | 64 | Arbeitsraum | 114 | |
| 15 | Radialgleitlager | 65 | Ansatz an 17 | 115 | |
| 16 | | 66 | | 116 | |
| 17 | Zylinder topfförmig | 67 | | 117 | |
| 18 | Verzahnung | 68 | Arbeitsraum | 118 | |
| 19 | Endabschnitt | 69 | | 119 | |
| 20 | | 70 | Kolben | 120 | |
| 21 | Erste Welle m. erster Kuppl. | 71 | Dichtung | 121 | |
| 22 | Zweite Welle = Hohlwelle m. zweiter Kuppl. | 72 | Dichtung | 122 | |
| 23 | | 73 | Lagereinrichtung (Betätigungs-) | 123 | |
| 24 | | 74 | Betätigungsring | 124 | |
| 25 | Verzahnung | 75 | Druckring | 125 | |
| 26 | Wellenkopplungselement | 76 | Gegendruckring | 126 | |
| 27 | Sicherungsring | 77 | | 127 | |
| 28 | | 78 | Rückstellfeder | 128 | |
| 29 | Lamellen radial inneren | 79 | Dichtelement (bewegte) | 129 | |
| 30 | Lamellen radial inneren | 80 | Anlaufscheiben | 130 | |
| 31 | | 81 | | 131 | |
| 32 | Lamelle radial äußere | 82 | | 132 | |
| 33 | Lamelle radial äußere | 83 | | 133 | |
| 34 | | 84 | | 134 | |
| 35 | Schenkel | 85 | | 135 | |
| 36 | Lamellenverbindungsteil m. U-förmigen Querschnitt | 86 | | 136 | |
| 37 | Schenkel | 87 | | 137 | |
| 38 | | 88 | | 138 | |
| 39 | | 89 | | 139 | |
| 40 | | 90 | | 140 | |
| 41 | | 91 | | | Sonderpositionen |
| 42 | Radial äußere Lamelle | 92 | | | |
| 43 | Radial äußere Lamelle | 93 | | | |
| 44 | | 94 | | | |
| 45 | | 95 | | | |
| 46 | | 96 | | | |
| 47 | | 97 | | | |
| 48 | | 98 | | | |
| 49 | Radial innere Lamelle | 99 | | | |
| 50 | Radial innere Lamelle | 100 | | | |

## Patentansprüche

1. Mehrfachkupplungsaggregat für ein Getriebe, mit einer ersten Kupplung (2), insbesondere einer Lamellenkupplung, die drehfest mit einer ersten Getriebeeingangswelle (21) verbunden ist, und mit mindestens einer zweiten Kupplung (3), insbesondere einer Lamellenkupplung, die drehfest mit einer zweiten Getriebeeingangswelle (22) verbunden und koaxial zu der ersten Kupplung (2) angeordnet ist, wobei die Kupplungen über Kolben-/Zylindereinheiten (17,19; 68,70) insbesondere hydraulisch betätigbar sind, **dadurch gekennzeichnet, dass** eine der Kolben-/Zylindereinheiten (17,19), insbesondere die der ersten Kupplung (2) zugeordnete Kolben-Zylindereinheit, einen im Wesentlichen topfförmigen Zylinder (17) umfasst, der drehfest, aber axial bewegbar mit einer der Getriebeeingangswellen (21), insbesondere der ersten Getriebeeingangswelle, verbunden ist und einen Arbeitsraum (63) begrenzt, der über ein Durchgangsloch (62) in der zugehörigen Getriebeeingangswelle (21) mit Druck beaufschlagbar ist.

2. Mehrfachkupplungsaggregat nach dem vorhergehenden Anspruch, **dadurch gekennzeichnet, dass** der topfförmige Zylinder (17) durch eine formschlüssige Verbindung (18), insbesondere eine Verzahnung, drehfest, aber axial bewegbar mit einer der Getriebeeingangswellen (21), insbesondere der ersten Getriebeeingangswelle, verbunden ist.

3. Mehrfachkupplungsaggregat nach einem der vorhergehenden Ansprüche, **dadurch gekennzeichnet, dass** der topfförmige Zylinder (17) über ein Zylinderkopplungselement (55) mit einer der Kupplungen (2), insbesondere mit radial inneren Lamellen der ersten Kupplung, gekoppelt ist.

4. Mehrfachkupplungsaggregat nach einem der vorhergehenden Ansprüche, **dadurch gekennzeichnet, dass** ein Wellenkopplungselement (56), das axial fest mit der zugehörigen Kupplung (2), insbesondere mit radial inneren Lamellen der ersten Kupplung, verbunden ist, axial fest zu der Getriebeeingangswelle (21), insbesondere zu der ersten Getriebeeingangswelle, angeordnet ist.

5. Mehrfachkupplungsaggregat nach Anspruch 4, **dadurch gekennzeichnet, dass** zwischen einem Teil des Wellenkopplungselements (56) und einem Ansatz (65) des topfförmigen Zylinders (17) ein Druckaufnahmeraum (64) ausgebildet ist, der, insbesondere über die formschlüssige Verbindung (18) zwischen dem Zylinder (17) und der zugehörigen Getriebeeingangswelle (21), mit dem Innenraum (63) des Zylinders (17) in Verbindung steht.

6. Mehrfachkupplungsaggregat nach einem der vorhergehenden Ansprüche, **dadurch gekennzeichnet, dass** an der äußeren Umfangsfläche des topfförmigen Zylinders (17) ein Getriebeeingangsteil (13) drehbar gelagert ist, das sowohl mit der ersten (2) als auch mit der zweiten (3) Kupplung, insbesondere mit radial äußeren Lamellen der ersten und der zweiten Kupplung, drehfest verbunden ist.

7. Mehrfachkupplungsaggregat nach Anspruch 6, **dadurch gekennzeichnet, dass** die radial äußeren Lamellen (42,43;32,33) der ersten (2) und der zweiten (3) Kupplung über Verzahnungen mit jeweils einem Schenkel (37;35) eines Lamellenverbindungsteils (36) drehfest verbunden sind, das einen im Wesentlichen U-förmigen Querschnitt aufweist und mit dem Getriebeeingangsteil (13) gekoppelt ist.

8. Mehrfachkupplungsaggregat nach Anspruch 7, **dadurch gekennzeichnet, dass** im Inneren des U-förmigen Lamellenverbindungsteils (36) ein im Wesentlichen ringförmiger Aufnahmeraum für eine der Kupplungen, insbesondere die erste Kupplung (2), gebildet ist.

9. Mehrfachkupplungsaggregat nach einem der vorhergehenden Ansprüche, **dadurch gekennzeichnet, dass** die andere der Kolben-/Zylindereinheiten, insbesondere die der zweiten Kupplung zugeordnete Kolben-/Zylindereinheit (68,70), einen feststehenden Zylinder umfasst, der mit einem axial bewegbaren Kolbenelement (68) zusammenwirkt, das unter Zwischenschaltung einer Lagereinrichtung (73) mit einem Betätigungselement (74) für die zugehörige Kupplung (3) gekoppelt ist.

10. Mehrfachkupplungsaggregat nach einem der vorhergehenden Ansprüche, **dadurch gekennzeichnet, dass** die zweite Getriebeeingangswelle (22) als Hohlwelle ausgebildet ist, welche die erste Getriebeeingangswelle (21) umschließt.

11. Mehrfachkupplungsaggregat nach einem der vorhergehenden Ansprüche, **dadurch gekennzeichnet, dass** den beiden Kupplungen (2,3) ein Drehschwingungsdämpfer (4) vorgeschaltet ist.

12. Getriebe mit einem Mehrfachkupplungsaggregat (1) nach einem der vorhergehenden Ansprüche.

## Claims

1. Multiple clutch unit for a transmission, having a first clutch (2), in particular a multiplate clutch, which is rotationally fixedly connected to a first transmission input shaft (21), and having at least one second clutch (3), in particular a multiplate clutch, which is rotationally fixedly connected to a second transmission input shaft (22) and is arranged coaxially with respect to the first clutch (2), with the clutches being in particular hydraulically actuable by means of piston/cylinder units (17, 19; 68, 70), **characterized in that** one of the piston/cylinder units (17, 19), in particular the piston/cylinder unit which is assigned to the first clutch (2), comprises a substantially pot-shaped cylinder (17) which is rotationally fixedly but axially movably connected to one of the transmission input shafts (21), in particular to the first transmission input shaft, and delimits a working space (63) which can be acted on with pressure via a passage hole (62) in the associated transmission input shaft (21).

2. Multiple clutch unit according to the preceding claim, **characterized in that** the pot-shaped cylinder (17) is rotationally fixedly but axially movably connected to one of the transmission input shafts (21), in particular to the first transmission input shaft, by means of a form-fitting connection (18), in particular a toothing.

3. Multiple clutch unit according to one of the preceding claims, **characterized in that** the pot-shaped cylinder (17) is coupled to one of the clutches (2), in particular to radially inner plates of the first clutch, by means of a cylinder coupling element (55).

4. Multiple clutch unit according to one of the preceding claims, **characterized in that** a shaft coupling element (56), which is axially fixedly connected to the associated clutch (2), in particular to radially inner plates of the first clutch, is arranged so as to be axially fixed with respect to the transmission input shaft (21), in particular with respect to the first transmission input shaft.

5. Multiple clutch unit according to Claim 4, **characterized in that** a pressure holding space (64) is formed between a part of the shaft coupling element (56) and a shoulder (65) of the pot-shaped cylinder (17), which pressure holding space (64) is connected, in particular by means of the form-fitting connection (18) between the cylinder (17) and the associated transmission input shaft (21), to the interior space (63) of the cylinder (17).

6. Multiple clutch unit according to one of the preceding claims, **characterized in that** a transmission input part (13) is rotatably mounted on the outer peripheral face of the pot-shaped cylinder (17), which transmission input part (13) is rotationally fixedly connected both to the first (2) and also to the second (3) clutch, in particular to radially outer plates of the first and of the second clutch.

7. Multiple clutch unit according to Claim 6, **characterized in that** the radially outer plates (42, 43; 32, 33) of the first (2) and of the second (3) clutch are rotationally fixedly connected by means of toothings to in each case one limb (37; 35) of a plate connecting part (36) which has a substantially U-shaped cross section and which is coupled to the transmission input part (13).

8. Multiple clutch unit according to Claim 7, **characterized in that** a substantially annular holding space for one of the clutches, in particular the first clutch (2), is formed in the interior of the U-shaped plate connecting part (36).

9. Multiple clutch unit according to one of the preceding claims, **characterized in that** the other one of the piston/cylinder units, in particular the piston/cylinder unit (68, 70) which is assigned to the second clutch, comprises a stationary cylinder which interacts with an axially movable piston element (68) which is coupled, with the interposition of a bearing device (73), to an actuating element (74) for the associated clutch (3).

10. Multiple clutch unit according to one of the preceding claims, **characterized in that** the second transmission input shaft (22) is embodied as a hollow shaft which surrounds the first transmission input shaft (21).

11. Multiple clutch unit according to one of the preceding claims, **characterized in that** a torsional vibration damper (4) is connected upstream of the two clutches (2, 3).

12. Transmission having a multiple clutch unit (1) according to one of the preceding claims.

## Revendications

1. Ensemble d'embrayage multiple pour une boîte de vitesses, comprenant un premier embrayage (2), notamment un embrayage multidisques, qui est connecté de manière solidaire en rotation à un premier arbre d'entrée de boîte de vitesses (21), et au moins un deuxième embrayage (3), notamment un embrayage multidisques, qui est connecté de manière solidaire en rotation à un deuxième arbre d'entrée de boîte de vitesses (22) et qui est disposé coaxialement au premier embrayage (2), les embrayages pouvant être actionnés par le biais d'unités cylindre-piston (17, 19 ; 68, 70), notamment de manière hydraulique, **caractérisé en ce que** l'une des unités cylindre-piston (17, 19), notamment l'unité cylindre-piston associée au premier embrayage (2), comprend un cylindre essentiellement en forme de pot (17) qui est connecté de manière solidaire en rotation mais déplaçable axialement à l'un des arbres d'entrée de boîte de vitesses (21), notamment le premier arbre d'entrée de boîte de vitesses, et qui délimite une chambre de travail (63) qui peut être sollicitée en pression par le biais d'un trou traversant (62) dans l'arbre d'entrée de boîte de vitesses associé (21).

2. Ensemble d'embrayage multiple selon la revendication précédente, **caractérisé en ce que** le cylindre en forme de pot (17) est connecté par une connexion par engagement positif (18), notamment une denture, de manière solidaire en rotation, mais déplaçable axialement, à l'un des arbres d'entrée de boîte de vitesses (21), notamment le premier arbre d'entrée de boîte de vitesses.

3. Ensemble d'embrayage multiple selon l'une quelconque des revendications précédentes, **caractérisé en ce que** le cylindre en forme de pot (17) est accouplé par le biais d'un élément de couplage de cylindre (55) à l'un des embrayages (2), notamment aux disques radialement internes du premier embrayage.

4. Ensemble d'embrayage multiple selon l'une quelconque des revendications précédentes, **caractérisé en ce qu'**un élément d'accouplement d'arbre (56), qui est connecté de manière fixe axialement à l'embrayage associé (2), notamment aux disques radialement internes du premier embrayage, est disposé de manière fixe axialement par rapport à l'arbre d'entrée de boîte de vitesses (21), notamment au premier arbre d'entrée de boîte de vitesses.

5. Ensemble d'embrayage multiple selon la revendication 4, **caractérisé en ce qu'**entre une partie de l'élément d'accouplement d'arbre (56) et un insert (65) du cylindre en forme de pot (17) est réalisée une chambre de réception de pression (64) qui est en liaison notamment par le biais de la connexion par engagement positif (18) entre le cylindre (17) et l'arbre d'entrée de boîte de vitesses associé (21), avec la chambre interne (63) du cylindre (17).

6. Ensemble d'embrayage multiple selon l'une quelconque des revendications précédentes,
**caractérisé en ce qu'**une partie d'entrée de boîte de vitesses (13) est montée à rotation sur la surface périphérique extérieure du cylindre en forme de pot 17, laquelle est connectée de manière solidaire en rotation à la fois au premier (2) et au deuxième (3) embrayage, notamment aux disques radialement externes du premier et du deuxième embrayage.

7. Ensemble d'embrayage multiple selon la revendication 6, **caractérisé en ce que** les disques radialement externes (42, 43 ; 32, 33) du premier (2) et du deuxième (3) embrayage sont connectés de manière solidaire en rotation à une branche respective (37 ; 35) d'une partie de connexion des disques (36), qui présente une section transversale essentiellement en forme de U et qui est accouplée à la partie d'entrée de boîte de vitesses (13).

8. Ensemble d'embrayage multiple selon la revendication 7, **caractérisé en ce qu'**une chambre de réception essentiellement annulaire est formée à l'intérieur de la partie de connexion de disques en forme de U (36), pour l'un des embrayages, notamment le premier embrayage (2).

9. Ensemble d'embrayage multiple selon l'une quelconque des revendications précédentes, **caractérisé en ce que** l'autre des unités cylindre-piston, notamment l'unité cylindre-piston (68, 70) associée au deuxième embrayage, présente un cylindre fixe qui coopère avec un élément de piston déplaçable axialement (68), qui est accouplé à un élément d'actionnement (74) pour l'embrayage associé (3) en interposant un dispositif de palier (73).

10. Ensemble d'embrayage multiple selon l'une quelconque des revendications précédentes, **caractérisé en ce que** le deuxième arbre d'entrée de boîte de vitesses (22) est réalisé sous forme d'arbre creux qui entoure le premier arbre d'entrée de boîte de vitesses (21).

11. Ensemble d'embrayage multiple selon l'une quelconque des revendications précédentes, **caractérisé en ce que** l'on monte avant les deux embrayages (2, 3) un amortisseur d'oscillations de rotation (4).

12. Boîte de vitesses comprenant un ensemble d'embrayage multiple (1) selon l'une quelconque des revendications précédentes.
